# EUROPEAN PATENT APPLICATION

(11) **EP 3 875 427 A1**
(43) Date of publication of application: **08.09.2021**
(21) Application number: 20305232.9
(22) Date of filing: 04.03.2020
(51) Int. Cl.: C01B 6/04, C01B 6/24, C01B 6/13, C01B 6/21

(54) **METHOD FOR PREPARING AN AMMINE METAL BOROHYDRIDE**

(71) Applicant: Commissariat à l'Energie Atomique et aux Energies Alternatives, 75015 Paris (FR)
(72) Inventor: HAJIYEV, Parviz, 38054 Grenoble cedex 9 (FR); CAPRON, Philippe, 38054 Grenoble cedex 9 (FR); IOSUB, Vasile, 38054 Grenoble cedex 9 (FR)
(74) Representative: Nony

(57) **Abstract**

Method for preparing an ammine metal borohydride of formula:

AₓM(BH₄)ₓ₊ₘ(NH₃)ₙ

wherein:
A is an alkali metal,
M is a metal different from an alkali metal,
0 ≤ x ≤ 2,
n > 0, and
m > 0,
the method comprising
- a nucleophilic addition reaction, implemented in liquid ammonia NH₃, of a metal hydride of formula AₓMHₓ₊ₘ and a borane complex of formula L•BH₃, L being a solvent forming a complex with a borane compound BH₃, such as to obtain a metal borohydride complex of formula AₓM(BH₄)ₓ₊ₘLₙ, and
- a displacement reaction between the metal borohydride complex and liquid ammonia to obtain the ammine metal borohydride.

## Description

The present invention deals with the chemical storage of hydrogen by means of metal borohydride-based materials. It notably deals with a method for manufacturing an ammine metal borohydride from starting compounds, and with a process which can be implemented for preparing the starting compounds, from the dehydrogenated ammine metal borohydride.

Metal borohydride-based materials have been intensively investigated for their potential as high capacity hydrogen storage materials. The thermolysis of a metal borohydride MBH₄ results in hydrogen release at a dehydrogenation temperature which is inversely proportional to the electronegativity of the metal M cation. Hence, high electronegativity metal borohydrides are well suited for mobile applications due to their low decomposition temperature. For instance, some transition metal borohydrides present a decomposition temperature lower than room temperature.

In order to overcome the drawbacks of instability and emission of diborane impurity during the decomposition of some high electronegativity metal borohydrides, specific metal borohydride-based materials have been developed.

For instance, it is known in the art to combine a low electronegativity alkali metal A with the metal M such as to form a bi-metal borohydride, AₓM(BH₄)ₓ₊ₘ, m being the oxidation degree of the metal M.

Known methods for manufacturing bi-metal borohydrides comprise a salt metathesis reaction (I)

MXₘ + (x+m) ABH₄ → AₓM(BH₄)ₓ₊ₘ + m AX (I)

where M is a metal, A is Na or Li and X is F or Cl. Reaction (I) requires ball-milling of the reactants. However, ball-milling is a costly and time-consuming mechanical technique which cannot be implemented industrially. Reaction (I) generally takes place in a solvent such as tetrahydrofuran, diethyl ether or dimethyl sulphide, which can result in the formation of undesired alkali halide by-products.

As a variant, it is also known from E. Roedern and T.R. Jensen, Inorg. Chem., vol. 54, no. 21, pp. 10477-10482, 2015, DOI: 10.1021/acs.inorgchem.5b01959, to proceed to a reaction in liquid ammonia in order to stabilize high electronegativity metals against reduction by borohydride. However, liquid ammonia is obtained by lowering the temperature to -50 °C at atmospheric pressure. Further, the method of Roedern *et al.* has low kinetics and the solubility of the reactants is low in liquid ammonia at -50 °C. As a consequence, it requires four hours stirring. It is thus both energy consuming and time consuming and is therefore not adapted for industrial preparation of a metal borohydride-based material. Furthermore, the process of Roedern et *al.* results in the formation of alkali chloride byproducts which cannot be filtered from the main phase. Use of fluoride precursors as starting materials could overcome this issue, but they are generally harmful to the environment.

Other known methods comprise the implementation of reactions with ammonia gas which results in the formation of ammine metal borohydrides of formula M(BH₄)ₘ(NH₃)ₙ. Ammine metal borohydrides are generally preferred to metal borohydrides since the protic hydrogens in ammonia molecules and hydridic hydrogens in borohydride anions ease the formation of dihydrogen during their decomposition.

To prepare ammine metal borohydrides, it is known, from instance from B. Richter et al., Inorg. Chem., 2018, 57, 17, 10768-10780, DOI: 10.1021/acs.inorgchem.8b01398, to implement a nucleophilic addition reaction (II)

MHₘ + *m* L•BH₃ → M(BH₄)ₘLₙ (II)

where M is a metal and L is a solvent being tetrahydrofuran or dimethyl sulphide. Although reaction (II) does not result in the formation of any alkali halide by-product, ball milling is nevertheless required to prevent from the formation of a metal borohydride phase that covers and passivates the surface of the metal hydride particles and would otherwise prevent from the completion of reaction (II). Furthermore, once reaction (II) is onset, soluble metal borohydride solvates are extracted from unreacted insoluble metal hydride precursors, which lowers the reaction rate.

In addition, the solvent L has to be removed from the compounds M(BH₄)ₙLₙ to form the ammine metal borohydride M(BH₄)ₙ(NH₃)ₙ, generally by passing ammonia gas over M(BH₄)ₙLₙ. However, because of the strong coordination of the solvent with the metal M, it is required in the prior art that the solvent is a weaker base than ammonia. This limits the number or potentials solvents for the preparation of ammine metal borohydrides.

Furthermore, once heated M(BH₄)ₘ(NH₃)ₙ will exothermally decompose and release hydrogen while turning into amorphous M(BNH)ₘ spent fuel. However, regeneration of M(BNH)ₘ spent fuel under high hydrogen pressure into M(BH₄)ₘ(NH₃)ₙ is not possible. To date, to the knowledge of the inventors, no successful chemical regeneration route exists for spent fuel of ammine metal borohydride M(BH₄)ₙ(NH₃)ₙ.

Therefore, there is a need for a process for manufacturing a metal borohydride-based material that alleviates the hereabove problems, and which can be implemented industrially. There is also a need for a chemical route for regenerating the spent fuel resulting from the thermal decomposition of the metal borohydride-based material.

Embodiments of the invention relate to a method for preparing an ammine metal borohydride of formula:

AₓM(BH₄)ₓ₊ₘ(NH₃)ₙ

wherein:
A is an alkali metal,
M is a metal different from an alkali metal,
0 ≤ x ≤ 2,
n > 0, and
m > 0,
the method comprising
- a nucleophilic addition reaction, implemented in liquid ammonia NH₃, of a metal hydride of formula AₓMHₓ₊ₘ and a borane complex of formula L•BH₃, L being a solvent forming a complex with a borane compound BH₃, such as to obtain a metal borohydride complex of formula AₓM(BH₄)ₓ₊ₘLₙ, and
- a displacement reaction between the metal borohydride complex and liquid ammonia to obtain the ammine metal borohydride.

The method results in the formation of an ammine metal borohydride, without any intermediate step of formation of a metal borohydride material. In addition, no ball milling of the reactants is necessarily required to prepare the ammine metal borohydride.

The method can thus be easily implemented industrially. In particular, the method can be free from any ball milling of the metal hydride and/or the borane complex.

Last, the method results in the formation of AₓM(BH₄)ₓ₊ₘ(NH₃)ₙ which can be decomposed and regenerated by implementing a new process, as it will appear in more details here below.

The method according to the invention can comprise one or more of the following optional features.

The coefficient x can be equal to 0.

Preferably, the coefficient x is greater than 0.

As compared to the material of formula M(BH₄)ₘ(NH₃)ₙ, the presence of the alkali metal A modifies the dehydrogenation temperature. Furthermore, it increases the theoretical hydrogen capacity of the material.

In some embodiments, x>0 and n>6. The purity of the hydrogen released from dehydrogenation of the material is increased and the impurity release of ammonia is minimized.

In some embodiments, the coordination sphere of the metal M can be partially occupied by ammonia molecules and partially by borohydride groups, and the polarization power of the alkali cation A⁺ can be higher than the polarization power of the metal cation M^{m+}. The purity of the hydrogen released from dehydrogenation of the material is therefore increased.

The coefficient x can be greater than or equal to 0.1, greater than or equal to 0.2, greater than or equal to 0.5, greater than or equal to 1.0, greater than or equal to 1.5, greater than or equal to 1.8, greater than or equal to 1.9.

The coefficient x can be equal to 2.

The coefficient x can be lower than or equal to 1.9, lower than or equal to 1.8, lower than or equal to 1.5, lower than or equal to 1.0, lower than or equal to 0.5, lower than or equal to 0.2, lower than or equal to 0.1.

The coefficient n preferably ranges between 2 and 6. It can be lower than or equal to 3. In particular, the coefficient n can be equal to 2. In some embodiments, it equals 3.

The coefficient m is the oxidation degree of metal M. Preferably, it ranges between 2 and 4. It can be equal to 2.

The alkali metal A can be chosen among Li, Na, K and their mixtures. In particular, the alkali metal A can be Li.

The metal M can be chosen among transition metals, earth alkali metals, post-transitions metals and their mixtures.

Preferably, the metal M is chosen among Mg, Sc, Y, Ti, Zr, Mn, Zn, Al and their mixtures.

Preferably, the metal M is chosen among Zn, Al, Mg and their mixtures. Preferably, the metal M is chosen among Mg, Al and their mixtures. In particular, the metal M can be Mg.

The protic hydrogen and hydridic hydrogen of the material act respectively as fuel and oxidizer. Preferably, the ratio [3*n]/[4*(m+x)] of the number of protic hydrogen atoms over the number of hydridic hydrogen atoms ranges between 0.5 and 1, such as to improve the purity of released hydrogen during dehydrogenation of the material.

The ammine metal borohydride obtained according to some embodiments of the method can be of formula LiₓAl(BH₄)₃₊ₓ(NH₃)ₙ wherein n ranges between 3 and 5.

The ammine metal borohydride obtained according to some embodiments of the method can be of formula AZn(BH₄)₃(NH₃)₂ wherein A is chosen among Li, Na, K and their mixtures.

The ammine metal borohydride obtained according to some preferred embodiments of the method can be of formula AₓMg(BH₄)₂₊ₓ(NH₃)ₙ wherein A is chosen among Li, Na, K and their mixtures, n preferably being equal to 2.

More especially, the ammine metal borohydride obtained by some embodiments of the method can be of formula Li₂Mg(BH₄)₄(NH₃)₂. The decomposition by heating of Li₂Mg(BH₄)₄(NH₃)₂ advantageously occurs at a temperature lower than 250 °C. It furthers provides 10 % hydrogen, in percentages by weight on the weight of Li₂Mg(BH₄)₄(NH₃)₂.

The solvent L can be a stronger base than ammonia at a temperature lower than 25°C and at an ammonia pressure of 1 bar.

Advantageously such a solvent L lowers, or even prevents from the occurrence of a reaction between both the borane complex and ammonia. This increases the rate of the nucleophilic addition reaction.

The solvent L is preferably an amine solvent.

The amine solvent can be of formula NR₃ where R is chosen among CH₃, C₂H₅, C₃H₇, C₄H₉ and their mixtures C₆H₅.

The amine solvent can be of formula NR₂R' or NRR'R" wherein R is different from R' and R" and R' is different from R" and any of R, R' and R" can be chosen among CH₃, C₂H₅, C₃H₇, C₄H₉ and C₆H₅.

Preferably, the solvent L is triethylamine N(CH₂CH₃)₃. At any temperature lower than 35 °C, triethylamine prevents from the reaction L•BH₃ + NH₃ → NH₃BH₃ + L to occur jointly with the nucleophilic addition reaction.

The nucleophilic addition reaction and the displacement reaction can be performed at a temperature greater than -33 °C, preferably greater than or equal to -30 °C, preferably greater than or equal 0 °C, preferably greater than or equal to 15 °C, for instance greater than or equal to 20 °C, such as to promote efficient and fast completion of both the nucleophilic addition reaction and the displacement reaction, by virtue of the liquid ammonia solubility at such temperature.

Preferably, the nucleophilic addition reaction and the displacement reaction are performed at a pressure greater than the atmospheric pressure, *i.e.* 1.013x10⁵ Pa.

The nucleophilic addition reaction and the displacement reaction are preferably performed at a pressure greater than or equal to 1.5 bar, preferably greater than or equal to 2 bar, preferably greater than or equal to 5 bar, notably greater than or equal to 8 bar, even greater than or equal to 10 bar.

In particular, the method can comprise the provision of the borane complex, the metal hydride and the liquid ammonia in a reactor, more than 95 % of the weight, preferably more than 99 % of the weight, more preferably all the weight of the borane complex provided in the reactor being consumed by the nucleophilic addition reaction.

Preferably, the nucleophilic addition reaction is implemented at a temperature greater than -33 °C, preferably greater than or equal to -30 °C, preferably greater than or equal to 0 °C, preferably greater than or equal to 15 °C, preferably ranging between 20 °C and 35 °C, preferably ranging between 25 °C and 30 °C, for instance at room temperature, such as to speed up its completion.

It is preferred that the nucleophilic addition reaction is completed before the onset of the displacement reaction. Notably for this purpose, the nucleophilic reaction is preferably implemented at a temperature lower than or equal to 35 °C.

The nucleophilic addition reaction and the displacement reaction are both implemented with liquid ammonia. Therefore, a man skilled in the art knows, on the basis of the phase diagram of ammonia, the pressure range for ammonia to be liquid at a known temperature, and *vice versa.*

Throughout the whole description, the pressure is absolute, *i.e.* it is zero in full vacuum.

Notably, the nucleophilic addition reaction can be implemented at a pressure greater than or equal to 2 bar, preferably greater than or equal to 5 bar, notably at a pressure ranging between 8 bar and 12 bar.

For instance, the nucleophilic addition reaction can be implemented at a temperature ranging between 20 °C and 30 °C and at a pressure ranging between 8.57 bar and 11.66 bar.

Besides, the method can comprise, prior to the nucleophilic addition reaction, the condensation of ammonia NH₃ in a reactor comprising the metal hydride and the borane complex. Furthermore, prior to the condensation of ammonia, the metal hydride and the borane complex can be mixed together.

The displacement reaction is preferably implemented after completion of the nucleophilic addition reaction.

In particular, it can be performed after more than 95 % of the weight, preferably more than 99% of the weight, preferably all the weight of the metal hydride contained in the reactor has been consumed by the nucleophilic addition reaction.

The temperature of the displacement reaction is preferably greater than the temperature of the nucleophilic addition reaction. In particular, after completion of the nucleophilic addition reaction, the method comprises the heating of the metal borohydride complex such as to trigger the displacement reaction.

Preferably, the displacement reaction is implemented at a temperature greater than or equal to 60 °C, preferably greater than or equal to 80 °C.

The displacement reaction can be implemented at a pressure greater than or equal to 26 bar, notably greater than or equal to 41 bar, for instance about 60 bar.

As an illustration, the displacement reaction can be implemented at a pressure of 26 bar and at a temperature of 60 °C or it can be implemented at a pressure of 41 bar at a temperature of 80 °C.

The displacement reaction can be completed after a duration ranging between 1 hour and 24 hours.

Preferably, the displacement reaction and the nucleophilic addition reaction are implemented in a same pressurized reactor. This simplifies the overall implementation of the method and alleviates from any additional transfer of the reaction products from the reactor to another container after completion of the nucleophilic addition reaction.

Preferably, the reactor is maintained under pressure between the end of the nucleophilic addition reaction and the onset of the displacement reaction. In particular, in some embodiments, the pressure is increased by heating up the reactor to onset the displacement reaction.

The reactor is adapted to withstand with a pressure greater than 5 bar, preferably greater than 10 bar, even preferably greater than 60 bar. For instance, it is made of stainless steel.

The method can further comprise a step of decomposition of the ammine metal borohydride such as to generate H₂ and a by-product compound of formula AₓM(BNH)ₓ₊ₘ.

Preferably, the decomposition is performed by heating the ammine metal borohydride at a temperature which is lower than 250 °C, preferably lower than 200 °C and preferably greater than 100 °C.

The method can comprise a step of oxidizing H₂ generated from decomposition of the ammine metal borohydride in a fuel cell.

Furthermore, prior to the nucleophilic addition reaction, the method can comprise a step of implementing the process according to the invention, described hereinafter, in order to provide the metal hydride of formula AₓMHₓ₊ₘ, the borane compound BH₃, optionally complexed with the solvent L in the form of a borane complex of formula L•BH₃ and, preferably ammonia NH₃, starting from the by-product of formula AxM(BNH)x+m.

Embodiments of the invention further relate to the use of the ammine metal borohydride obtained by the method according to the invention for generating dihydrogen.

Embodiments of the invention also relate to a process for preparing a metal hydride of formula AₓMHₓ₊ₘ and a borane compound BH₃, starting from a product of formula AₓM(BNH)ₓ₊ₘ, wherein:
A is an alkali metal,
M is a metal different from an alkali metal,
0 ≤ x ≤ 2
m>0,
the process comprising:
a) the heating of the product of formula AₓM(BNH)ₓ₊ₘ to separate therefrom a metal compound AₓM and a hydrogenated boron nitride compound BNH,
b) the hydrogenation of the metal compound AₓM such as to obtain the metal hydride of formula AₓMHₓ₊ₘ,
c) the synthesis of the borane compound BH₃, from the hydrogenated boron nitride compound BNH, the synthesis comprising:
   - a digestion reaction of the boron nitride compound BNH in a gaseous atmosphere containing, even consisting in, an anhydrous hydrogen halide acid gas comprising at least one halogen element Y, such as to produce a boron halide BY₃,
   - a hydrodehalogenation of the boron halide in a hydrogen gas atmosphere to obtain the borane compound BH₃.

The process of the invention provides an efficient and easy to implement a chemical route to produce the starting materials which are required to the manufacture of the ammine metal borohydride with the method according to the invention.

The process according to the invention can comprise one or more of the following optional features.

The coefficient x can be greater than or equal to 0.1, greater than or equal to 0.2, greater than or equal to 0.5, greater than or equal to 1.0, greater than or equal to 1.5, greater than or equal to 1.8, greater than or equal to 1.9.

The coefficient x can be equal to 2.

The coefficient x can be lower than or equal to 1.9, lower than or equal to 1.8, lower than or equal to 1.5, lower than or equal to 1.0, lower than or equal to 0.5, lower than or equal to 0.2, lower than or equal to 0.1.

The coefficient n preferably ranges between 2 and 6. It can be lower than or equal to 3. It can equal 2. In some embodiment, it equals 3.

Preferably, the coefficient m ranges between 2 and 4. It can be equal to 2.

The alkali metal A can be chosen among Li, Na, K and their mixtures. In particular, the alkali metal A can be Li.

The metal M can be chosen among transition metals, earth alkali metals, post-transitions metals and their mixtures.

Preferably, the metal M is chosen among Mg, Sc, Y, Ti, Zr, Mn, Zn, Al and their mixtures.

Preferably, the metal M is chosen among Zn, Al, Mg and their mixtures. Preferably, the metal M is chosen among Mg, Al and their mixtures. In particular, the metal M can be Mg.

The metal M can be chosen among transition metals, earth alkali metals, post-transitions metals and their mixtures.

Preferably, the metal M is chosen among Mg, Sc, Y, Ti, Zr, Mn, Zn, Al and their mixtures.

Preferably, the metal M is chosen among Zn, Al, Mg and their mixtures. Preferably, the metal M is chosen among Mg, Al and their mixtures. In particular, the metal M can be Mg.

In some embodiments, the product of formula AₓM(BNH)ₓ₊ₘ can be AZn(BNH)ₓ₊ₘ wherein A is chosen among Li, Na, K and their mixtures.

In some preferred embodiments, the product of formula AₓM(BNH)ₓ₊ₘ can be LiₓAl(BNH)₃₊ₓ.

In some preferred embodiments, the product of formula AₓM(BNH)ₓ₊ₘ can be A₂Mg(BNH)₄ wherein A is chosen among Li, Na, K and their mixtures. More especially, it can be of formula Li₂Mg(BNH)₄.

The heating temperature at step a) depends on the metals A and M forming the metal compound. Preferably, the heating temperature at step a) is greater than the melting temperature of the metal compound AₓM and is lower than the melting temperature of boron nitride. This eases the separation of the metal compound AₓM from the boron nitride compound. In particular, the molten metal compound can be separated from the solid boron nitride compound.

In particular, the heating temperature at step a) can range between 400 °C and 1500 °C.

For instance, in some embodiments, the alkali metal comprises magnesium, respectively aluminium, and the heating temperature at step a) is greater than 650 °C, respectively 660 °C.

In particular, the boron nitride compound BNH and the metal compound AₓM are separated through a density-base separation technique, which takes advantage of the differences of density between boron nitride and the metal compound.

Step a) can further comprise cooling such as to solidify the molten metal compound.

The heating at step a) is preferably performed under an inert atmosphere, for instance in an argon atmosphere to prevent from any oxidation.

At the end of step a), the metal compound AₓM and the hydrogenated boron nitride compound BNH are obtained and can be further processed through steps b) and c) respectively.

Step b) can be performed before or after or jointly with step c).

At the end of step a), the metal compound can be in the form of a solid chunk.

At step b), the metal compound is preferably hydrogenated inside an autoclave in a H₂ gas atmosphere at a pressure greater than 1 bar, for instance greater than 5 bar, and lower than 200 bar and at a temperature lower than 400 °C. For instance, B. Sakintuna et al., International Journal of Hydrogen Energy, Vol. 32, Issue 9, pp 1121-1240, 2007, doi:10.1016/j.ijhydene.2006.11.022, V.A. Yartys et al., International Journal of Hydrogen Energy, Vol. 44, pp. 7809-7859, doi:10.1016/j.ijhydene.2018.12.212 and J. Graetz et al., J. Am. Chem. Soc. 2008, Vol. 130, pp. 17790-17794, doi:10.1021/ja805353w provide details to proceed to hydrogenation of metals.

Step b) can be performed in decrepitation conditions such as to obtain the metal hydride of formula AₓMHₓ₊ₘ is in a form of a powder.

At step c), the halogen element Y can be chosen among F, Cl, Br and their mixtures. Preferably the halogen element Y is chlorine Cl.

Prior to the digestion reaction, a solution can be prepared comprising the hydrogenated boron nitride compound BNH, a solvent chosen among CS₂, CCl₄, C₂Cl₄ and their mixtures and a compound chosen among AlCl₃ CuCl₂ and their mixtures that form together with the halide acid a superacid/solvent system.

Preferably, the digestion reaction results in the formation of an ammonia halide of formula NH₄Y and the process comprises the production of ammonia NH₃ from the ammonia halide, for instance by means of a heating that results in the decomposition of the ammonia halide into ammonia and at least one hydrogen halide gas HY, which can be reused.

The digestion reaction can be implemented at a temperature ranging between 20 °C and 100 °C and at a pressure ranging between 1 bar and 40 bar.

For instance, the digestion reaction can be performed by mixing the BNH compound with CS₂ and AlCl₃ and submitting the obtained solution in anhydrous HCl gas at a temperature of 80 °C and at a pressure of 40 bar.

The process can comprise the synthesis of the borane compound BH₃, complexed in a solvent L in the form of a complex of formula L•BH₃.

According to some embodiments, step c) can comprise a preparation of a solution of the boron halide BY₃ in the solvent L such as to form a L•BY₃ complex and the hydrodehalogenation is performed with boron halide being so complexed in the form of the L•BY₃ complex, such as to obtain the borane compound BH₃, complexed in a solvent L in the form of a complex of formula L•BH₃.

The preparation of the solution of BY₃ in the solvent L can comprise the stirring of the solvent L in a gaseous BY₃ atmosphere at a temperature greater than 25 °C.

Once the complex L•BY₃ is formed, the process can comprise mixing the L•BY₃ complex in the solvent L.

According to some preferred embodiments, the process comprises a step d), successive to step c), comprising the preparation a solution of the boron compound BH₃ with a solvent L such as to form a borane complex of formula L•BH₃.

The solvent L is preferably an amine solvent.

The amine solvent can be of formula NR₃ where R is chosen among CH₃, C₂H₅, C₃H₇, C₄H₉, C₆H₅ and their mixtures.

The amine solvent can be of formula NR₂R' or NRR'R" wherein R is different from R' and R" and R' is different from R" and any of R, R' and R" can be chosen among CH₃, C₂H₅, C₃H₇, C₄H₉ and C₆H₅.

Preferably, solvent L is triethylamine N(CH₂CH₃)₃.

The hydrodehalogenation of boron halide BY₃, optionally complexed in the form of L•BY₃, in a hydrogen gas atmosphere to obtain the borane compound BH₃, respectively the borane complex L•BH₃, is preferably implemented in the presence of a catalyst, preferably chosen among MₘB, MₘBN and their mixtures, wherein M is chosen among Ni, Pd, Fe, Co, Cu and their mixtures. Examples of hydrodechlorination of N(CH₂CH₃)₃•BCl₃ in the presence of Ni₃B catalyst is for instance described in C. Reller and F. Mertens, "A self-contained regeneration scheme of spent ammonia borane based on the catalytic hydrodechlorination of BCl3", Angew. Chem. Int. Ed., 2012, 51, 11731-11735, doi: 10.1002/anie.201201134.

The hydrodehalogenation of boron halide BY₃, optionally complexed in the form of L•BY₃, can be performed at a temperature greater than or equal to 20 °C, notably greater than or equal to 50 °C and preferably lower than or equal to 100 °C, notably about 80 °C and/or at a pressure greater than 1 bar, notably greater than or equal to 10 bar and preferably lower than 40 bar.

The hydrodehalogenation of boron halide BY₃, optionally complexed in the form of L•BY₃, can be implemented for a duration of less than 24 hours.

In some embodiments, the hydrodehalogenation of boron halide BY₃ complexed in the form of L•BY₃, can result in the formation of L•HY, which can be reduced such as to obtain the anhydrous hydrogen halide acid HY. In some other embodiments, the hydrogen halide acid complex L•HY can be reacted with ammonia such as to form NH₄Y, especially if the temperature to proceed to the reduction of said halide acid complex is greater than the degradation temperature of solvent L.

Furthermore, the process can comprise a step, performed after step c), or if appropriate after step d), of implementation of the method according to the invention.

Embodiments of the method and of the process according to the invention are illustrated hereafter with the non-limitative following examples.

### Example

111 mg of particles of Li₂MgH₄ have been mixed with 1.59 ml of TEA•BH₃ ("TEA" being an acronym of triethylamine) in a stainless-steel pressurized reactor marketed by the Swagelok® company. Then, 1038 STP ml of gaseous ammonia NH₃ has been condensed in the reactor, resulting in a liquid ammonia volume of about 1.04 ml at a pressure above 10 bar. Mixing has been performed in a closed reactor at room temperature of 25 °C and at a pressure of 10 bar for 2 days.

Then the reactor has been heated up to 80 °C and subsequently the pressure has been raised up to 41.4 bar. The temperature and pressure have been maintained for 6 hours. Then a dynamic vacuum has been applied for 6 hours while maintaining the 80 °C reactor temperature, such as to ensure the 'evaporation' of excess ammonia. Thus 4 moles of ammonia is released from Li₂Mg(BH₄)₄(NH₃)₆ forming Li₂Mg(BH₄)₄(NH₃)₂.

339 mg of Li₂Mg(BH₄)₄(NH₃)₂ has been extracted from the reactor.

## Claims

1. Method for preparing an ammine metal borohydride of formula:
AₓM(BH₄)ₓ₊ₘ(NH₃)ₙ
wherein:
A is an alkali metal,
M is a metal different from an alkali metal,
0 ≤ x ≤ 2,
n > 0, and
m > 0,
the method comprising
- a nucleophilic addition reaction, implemented in liquid ammonia NH₃, of a metal hydride of formula AₓMHₓ₊ₘ and a borane complex of formula L•BH₃, L being a solvent forming a complex with a borane compound BH₃, such as to obtain a metal borohydride complex of formula AₓM(BH₄)ₓ₊ₘLₙ, and
- a displacement reaction between the metal borohydride complex and liquid ammonia to obtain the ammine metal borohydride.

2. Method according to claim 1, the solvent L being a stronger base than ammonia at a temperature lower than 25°C and at an ammonia pressure of 1 bar.

3. Method according to anyone of claims 1 and 2, the solvent L being an amine solvent, the solvent L being preferably triethylamine N(CH₂CH₃)₃.

4. Method according to anyone of the preceding claims, the ammine metal borohydride being of formula:
AₓMg(BH₄)₄(NH₃)ₙ
wherein A is chosen among Li, Na, K and their mixtures, n preferably being equal to 2.

5. Method according to the preceding claim, the ammine metal borohydride being of formula Li₂Mg(BH₄)₄(NH₃)₂.

6. Method according to anyone of the preceding claims, the nucleophilic addition reaction and the displacement reaction being performed at a temperature greater than -33 °C, preferably greater than or equal to -30 °C, preferably greater than or equal to 0 °C, preferably greater than or equal to 15 °C, for instance greater than or equal to 20 °C.

7. Method according to anyone of the preceding claims, the nucleophilic addition reaction and the displacement reaction being performed at a pressure greater than the atmospheric pressure, preferably greater than or equal to 1.5 bar, preferably greater than or equal to 2 bar, preferably greater than or equal to 5 bar, notably greater than or equal to 8 bar, even greater than or equal to 10 bar.

8. Method according to anyone of the preceding claims, comprising the provision of the borane complex, the metal hydride and the liquid ammonia in a reactor, more than 95 % of the weight, preferably more than 99 % of the weight, more preferably all the weight of the borane complex provided in the reactor being consumed by the nucleophilic addition reaction.

9. Method according to anyone of the preceding claims, the nucleophilic reaction being implemented at a temperature greater than -33 °C, preferably greater than or equal to 0 °C, preferably greater than or equal to 15 °C, and preferably lower than or equal to 35 °C.

10. Method according to anyone of the preceding claims, the temperature of the displacement reaction being greater than the temperature of the nucleophilic addition reaction, preferably the displacement reaction being implemented at a temperature greater than or equal to 60 °C, preferably greater than or equal to 80 °C.

11. Method according to anyone of the preceding claims, the displacement reaction and the nucleophilic addition reaction being implemented in a same pressurized reactor.

12. Process for preparing a metal hydride of formula AₓMHₓ₊ₘ and a borane compound BH₃, starting from a product of formula AₓM(BNH)ₓ₊ₘ, wherein:
A is an alkali metal,
M is a metal different from an alkali metal,
0 ≤ x ≤ 2
m>0,
the process comprising:
a) the heating of the product of formula AₓM(BNH)ₓ₊ₘ to separate therefrom a metal compound AₓM and a hydrogenated boron nitride compound BNH,
b) the hydrogenation of the metal compound AₓM such as to obtain the metal hydride of formula AₓMHₓ₊ₘ,
c) the synthesis of the borane compound BH₃, from the hydrogenated boron nitride compound BNH, the synthesis comprising:
- a digestion reaction of the boron nitride compound BNH in a gaseous atmosphere containing, even consisting in, an anhydrous hydrogen halide acid gas comprising at least one halogen element Y, such as to produce a boron halide BY₃, Y being preferably chlorine Cl,
- a hydrodehalogenation of the boron halide, in a hydrogen gas atmosphere to obtain the borane compound BH₃.

13. Process according to the preceding claim, comprising a step d), successive to step c), comprising the preparation a solution of the boron compound BH₃ with a solvent L such as to form a borane complex of formula L•BH₃.

14. Process according to claim 12, step c) comprising a preparation of a solution of the boron halide BY₃ in a solvent L such as to form a L•BY₃ complex and the hydrodehalogenation being performed with boron halide being so complexed, such as to obtain the borane compound BH₃, complexed in a solvent L in the form of a complex of formula L•BH₃.

15. Process according to anyone of claims 12 to 14, the digestion reaction resulting in the formation of an ammonia halide of formula NH4Y and the process comprising the production of ammonia NH3 from the ammonia halide.

16. Process according to anyone of claims 12 to 15, the hydrodehalogenation of L•BY₃ being performed at a temperature greater than or equal to 20 °C, notably greater than or equal to 50 °C and preferably lower than or equal to 100 °C and/or at a pressure greater than 1 bar, notably greater than or equal to 10 bar and preferably lower than 40 bar, preferably in the presence of a catalyst.

17. Process according to anyone of claims 12 to 16, comprising a step performed after step c), or if appropriate step d), of implementation of the method according to anyone of claims 1 to 10.
